# EUROPÄISCHE PATENTSCHRIFT

(11) **EP 1 041 097 B1**
(45) Veröffentlichungstag und Bekanntmachung des Hinweises auf die Patenterteilung: **28.12.2005**
(21) Anmeldenummer: 00105350.3
(22) Anmeldetag: 17.03.2000
(51) Int. Cl.: C08G 18/28, C08G 18/66, C14C 11/00, D06M 15/564, C08G 18/10, C08G 18/78

(54) **Polyurethanlösung mit aminofunktionellen heterocyclischen Abstoppern**
Polyurethane solution with aminofunctional heterocyclic terminators
Solution de polyuréthane avec des agents de terminaison hétérocycliques aminofonctionnels

(30) Priorität: 30.03.1999 DE 19914293
(43) Veröffentlichungstag der Anmeldung: 04.10.2000
(73) Patentinhaber: Bayer MaterialScience AG, 51368 Leverkusen (DE)
(72) Erfinder: Blum, Harald, Dr., 51375 Leverkusen (DE); Schütze, Detlef-Ingo, Dr., 51061 Köln (DE)

(56) Entgegenhaltungen:
- EP-A- 0 741 157
- EP-A- 0 802 210
- DE-A- 4 132 747
- US-A- 3 721 645
- US-A- 5 352 755

## Beschreibung

Die Erfindung betrifft Polyurethanlösungen mit aminofunktionellen heterocyclischen Abstoppern, ein Verfahren zur Herstellung solcher Polyurethanlösungen und die Verwendung entsprechender Polyurethanlösungen.

Polyurethanlösungen sind seit langem bekannt, siehe z.B. D. Diederich, Methoden der Organischen Chemie (Houben-Weyl), Band E20, Georg Thieme Verlag, 1997 und dort zitierte Literatur.

Polyurethanlösungen sind in der Regel hochmolekulare Umsetzungsprodukte aus aliphatischen und/oder aromatischen Di- bzw. Polyisocyanaten mit di- bzw. trifunktionellen Polyolen und/oder Diaminen. Die Umsetzung der isocyanatfunktionellen mit den hydroxyl- und/oder aminofunktionellen Verbindungen erfolgt dabei zur Erzielung der gewünschten hohen Molekulargewichte nahe am Äquivalenzpunkt.

Um lösliche und gut verarbeitbare Produkte zu erhalten, muß bei Erreichen der gewünschten Molekulargewichte bzw. Viskositäten der Polyurethanlösungen die Kettenaufbaureaktion abgestoppt werden. Dies geschieht üblicherweise durch Zugabe niedermolekularer, reaktiver Verbindungen wie z.B. Monoamin (DE-A-2 633 293), Monoisocyanat oder Acetanhydrid (DE-A-2 500 921, EP-A-0 129 396), durch Zugabe reaktiver monofunktioneller Alkohole wie Methanol oder durch Zugabe anderer kettenabstoppend wirkender Verbindungen wie beispielsweise Butanonoxim (DE-A-3 142 706).

In der technischen Praxis wird dabei in der Regel ein gewisser Überschuß an Abstoppungsreagenz zugegeben, um eine sichere Abstoppung zu gewährleisten. Dieser Überschuß kann sich jedoch negativ auf Beschichtungseigenschaften auswirken, was sich z.B. durch Geruchsbelästigung, durch Ausschwitzen, durch Haftungsprobleme sowie durch Bildung von Fehlstellen im Film durch Blasen und Kraterbildung bemerkbar machen kann. Auch die Lagerstabilität solcher Lösungen kann dadurch beeinträchtigt werden. Überschüssiges freies Monoamin, Monoisocyanat oder auch überschüssiger reaktiver Monoalkohol kann durch schleichende Reaktion mit Urethan- oder Esterbindungen im Polymer, insbesondere während der in der Praxis unvermeidlichen Lagerzeiten, zu erheblichen Viskositätsänderungen, bis hin zu gravierenden Abbauerscheinungen, verbunden mit einem Verlust der Eigenschaften, führen.

Da Polyurethanlösungen in der Regel keine reaktiven Endgruppen mehr aufweisen, erfolgt nach der Applikation lediglich eine physikalische Trocknung. Eine chemische Verknüpfung über reaktive Gruppen am Kettenende mit reaktiven Gruppen des Substrates ist nicht möglich.

Bekannt aus DE-A-3 401 753 sind Polyurethanlösungen mit endständigen Aminogruppen, die für eine spätere Vernetzungsreaktion zur Verfügung stehen. Dieses erfordert jedoch die nachträgliche Zugabe eines Reaktionspartners

DE-A 4 132 747 beschreibt ein Verfahren zur Herstellung von Polyurethanharnstoff-lösungen auf Basis von Diisocyanaten, Dihydroxyverbindungen und difunktionellen Kettenverlängerungsmitten, gekennzeichnet dadurch, dass dem Kettenverlängerungsmittel 1-14 (bzw. 3-9) Mol-% eines NH-aciden Pyrazols zugesetzt wird. Im Gegensatz zur vorliegenden Erfindung lag dieser Publikation jedoch die Aufgabe zugrunde, ein Verfahren zur Herstellung von Polyurethanharnstoff-Lösungen zur Verfügung zu stellen, mit dem auf einfache Weise reproduzierbar eine gewünschte Viskosität eingestellt werden kann.

EP-A 0 741 157 beschreibt als Vernetzer für Einbrennlacke geeigneten Lack-Polyisocyanate, die mit 1,2,4-Triazol blockierte Isocyanatgruppen enthalten, in Lösung keine hohe Viskosität aufweisen, eine Abspalttemperatur von 130-140°C ermöglichen und eine möglichst gering Thermovergilbung aufweisen. Diese werden durch ein dort näher beschriebenes Verfahen erhalten, bei dessen Durchführung die Reaktionsfolge ist im Gegensatz zur Lehre der vorliegenden Erfindung nicht von maßgeblicher Bedeutung ist.

Aufgabe der Erfindung war es daher, Polyurethanlösungen zur Verfügung zu stellen, die die genannten Nachteile nicht aufweisen, d.h. insbesondere Polyurethanlösungen zur Verfügung zu stellen, die Polyurethane mit hohen Molekulargewichten enthalten, sicher herstellbar und abstoppbar sind und die bei der Verwendung in Beschichtungen keine Probleme durch unzureichende Haftung oder nicht ausreichende Filmoptik verursachen. Dabei muß sichergestellt sein, daß sich eventuell zugesetzte überschüssige Mengen an Abstopper nicht negativ auf die Lagerstabilität der Lösung und auf die Eigenschaften der Beschichtung auswirken.

Überraschender Weise wurde nun gefunden, daß Polyurethanlösungen, die aminofunktionelle Heterocyclen als Abstopper eingebaut enthalten, die gestellten Anforderungen erfüllen. Überraschenderweise wurde darüber hinaus eine sehr gute Haftung und ein besonders angenehmer Griff bei Beschichtungen auf Basis der erfindungsgemäßen Polyurethanlösungen gefunden. Es wurde auch gefunden, daß die erfindungsgemäßen Polyurethanlösungen zur Herstellung hochwertiger Beschichtungen mit hoher Wasserdampfdurchlässigkeit, und einem damit verbundenen, ausgezeichneten Tragekomfort sehr gut geeignet sind. Die erfindungsgemäßen Beschichtungen vereinen dabei eine hohe Wasserdampfdurchlässigkeit mit einer sehr guten Wasserfestigkeit bzw. Naßechtheit und einer relativ niedrigen Wasserquellung.

Gegenstand der Erfindung sind somit Lösungen von Polyurethanen in organischen Lösungsmitteln, erhältlich durch Umsetzung von
a) mindestens eines, mindestens difunktionellen Polyols des Molekulargewichtes 500 bis 16000,
b) mindestens eines, mindestens difunktionellen Polyisocyanates des Molekulargewichtes 140 bis 1500,
c) gegebenenfalls mindestens eines niedermolekularen, mindestens difunktionellen Alkohols und/oder Amins des Molekulargewichtes 32 bis 500 und
d) mindestens einer monoaminofunktionellen heterocyclischen Verbindung wobei aus mindestens einem Polyol (a), mindestens einem Polyisocyanat (b), gegebenenfalls unter Mitverwendung der Komponente (c), in einer ein- oder zweistufigen Reaktion ein isocyanatfunktionelles Polyurethan hergestellt wird, welches gegebenenfalls in einem weiteren Reaktionsschritt durch Umsetzung mit einer mindestens difunktionellen Komponente (c) einen weiteren Molekulargewichtsaufbau erfährt und in einem abschließenden Reaktionsschritt mit einer monoaminofunktionellen heterocyclischen Verbindung (d) zu einem keine freien Isocyanatgruppen mehr aufweisenden, hochmolekularen Polyurethan bzw. Polyurethan-Polyharnstoff umgesetzt wird, wobei entweder vor, während oder nach dem ersten Reaktionsschritt soviel organisches Lösemittel zugesetzt wird, das die resultierende Polyurethan- bzw. Polyurethan-Polyharnstofflösung einen Festkörpergehalt von 9 bis 65 Gew.-% aufweist.

Bevorzugt sind erfindungsgemäß Lösungen von Polyurethanen in organischen Lösungsmitteln, erhältlich durch entsprechende Umsetzung von
a) 40 bis 92 Gew.-% mindestens eines, mindestens difunktionellen Polyols des Molekulargewichtes 500 bis 16000,
b) 7 bis 50 Gew.-% mindestens eines, mindestens difunktionellen Polyisocyanates des Molekulargewichtes 140 bis 1500,
c) 0 bis 20 Gew.-% mindestens eines niedermolekularen, mindestens difunktionellen Alkohols und/oder Amins des Molekulargewichtes 32 bis 500 und
d) 0,1 bis 3 Gew.-% mindestens einer monoaminofunktionellen heterocyclischen Verbindung.

Besonders bevorzugt sind erfindungsgemäß Lösungen von Polyurethanen in organischen Lösungsmitteln, erhältlich durch entsprechende Umsetzung von
a) 47 bis 88 Gew.-% mindestens eines, mindestens difunktionellen Polyols des Molekularge- wichtes 500 bis 16000,
b) 10 bis 40 Gew.-% mindestens eines difunktionellen Polyisocyanates des Molekulargewichtes 168 bis 300,
c) 0,5 bis 17 Gew-% mindestens eines niedermolekularen, mindestens difunktionellen Alkohols und/oder Amins des Molekulargewichtes 32 bis 500 und
d) 0,3 bis 1,10 Gew.-% einer monoaminofunktionellen heterocyclischen Verbindung.

Gegenstand der Erfindung ist auch ein Verfahren zur Herstellung dieser Polyurethanlösungen, dadurch gekennzeichnet, daß zunächst aus mindestens einem Polyol (a), mindestens einem mindestens difunktionellen Polyisocyanates (b) gegebenenfalls unter Mitverwendung einer niedermolekularen Komponente (c) in einer ein- oder zweistufigen Reaktion ein isocyanatfunktionelles Polyurethan hergestellt wird, welches dann gegebenenfalls in einem weiteren Reaktionsschritt durch Umsetzung mit einer mindestens difunktionellen Komponente (c) einen weiteren Molekulargewichtsaufbau erfährt und in einem abschließenden Reaktionsschritt mit einer monoaminofunktionellen heterocyclischenVerbindung (d) zu einem keine freien Isocyanatgruppen mehr aufweisenden hochmolekularen Polyurethan bzw. Polyurethan-Polyharnstoff umgesetzt wird, wobei entweder vor, während oder nach dem ersten Reaktionsschritt soviel organisches Lösemittel zugesetzt wird, das die resultierende Polyurethan- bzw. Polyurethan-Polyharnstofflösung einen Festkörpergehalt von 9 bis 65 Gew.-% aufweist.

Gegenstand der Erfindung ist auch die Verwendung von Polyurethanlösungen, enthaltend über Harnstoffbindungen zu mindestens 50% eingebaute monoaminofunktionelle heterocyclische Verbindungen, in Lacken, Beschichtungen, Dichtstoffen und/oder Klebstoffen sowie mit aus diesen erhaltenen Filmen beschichtete Substrate.

Die Bezeichnung Polyurethanlösung schließt auch Polyurethan-PolyharnstoffLösungen und auch Lösungen ein, die z.B. Trimerisat-, Uretdion-, Allophanat-, und/oder Biuretstruktureinheiten in untergeordneten Mengen neben Urethan-und/oder Harnstoffstruktureinheiten enthalten. Die Lösungen sind in der Regel klar, es sind jedoch auch Lösungen eingeschlossen, die ein trübes bzw. opakes Aussehen aufweisen, dies ist jedoch weniger bevorzugt.

Zur Herstellung der erfindungsgemäßen Polyurethanlösungen geeignete Polyolkomponenten (a) sind z.B. Polyesterpolyole (z.B. Ullmanns Enzyklopädie der technischen Chemie, 4. Auflage, Band 19, S. 62-65). Geeignete Rohstoffe zur Herstellung dieser Polyesterpolyole sind difunktionelle Alkohole wie Ethylenglykol, 1,2- und 1,3-Propylenglykol, 1,3-, 1,4-, 2,3-Butandiol, 1,6-Hexandiol, Neopentylglykol, Trimethylhexandiol, Triethylenglykol, Tetraethylenglykol, hydrierte Bisphenole, Trimethylpentandiol, Diethylendiglykol, Dipropylendiglykol, 1,4-Cyclohexan-diol, 1,4-Cyclohexandimethanol und difunktionelle Carbonsäuren bzw. deren Anhydride wie Adipinsäure, Phthalsäure(anhydrid), Isophthalsäure, Maleinsäure(an-hydrid), Terephthalsäure, Tetrahydrophthalsäure(anhydrid), Hexahydrophthalsäure(anhydrid), Bernsteinsäure(anhydrid), Fumarsäure, Azelainsäure, Dimerfettsäuren. Ebenfalls zur Mitvervendung in untergeordneten Mengen geeignete Polyesterrohstoffe sind Monocarbonsäuren wie Benzoesäure, 2-Ethylhexansäure, Ölsäure, Sojaölfettsäure, Stearinfettsäure, Erdnußölfettsäure, Leinölfettsäure, Nonansäure, Cyclohexanmonocarbonsäure, Isononansäure, Sorbinsäure, Konjuenfettsäure, höherfunktionelle Carbonsäuren oder Alkohole wie Trimellithsäure(an-hydrid), Butantetracarbonsäure, Trimerfettsäuren, Trimethylolpropan, Glycerin, Pentaerythrit, Rizinusöl, Dipentaerythrit und andere dem Fachmann auf diesem Gebiet benannte Polyesterrohstoffe.

Ebenfalls geeignete Polyolkomponenten (a) sind Polycarbonatdiole die z.B durch Umsetzung von Diphenyl- oder Dimethylcarbonat mit niedermolekularen Di- oder Triolen bzw. ε-Caprolacton-modifizierten Di- oder Triolen der oben genannten Art erhalten werden können.

Ebenfalls geeignete Polyolkomponenten (a) sind hydroxyfunktionelle Silicone bzw. Polysiloxane wie z.B. Baysilon® OF (Bayer AG).

Ebenfalls geeignet sind Polyesterdiole auf Lactonbasis, wobei es sich um Homo-oder Mischpolymerisate von Lactonen, bevorzugt um endständige Hydroxylgruppen aufweisende Anlagerungsprodukte von Lactonen wie z.B. ε-Caprolacton oder gamma-Butyrolacton an difunktionelle Startermoleküle handelt. Geeignete Startermoleküle können die oben genannten Diole, aber auch niedermolekulare Polyester- oder Polyetherdiole sein. Anstelle der Polymerisate von Lactonen können auch die entsprechenden Hydroxycarbonsäuren eingesetzt werden.

Ebenfalls geeignete Polyolkomponenten (a) sind Polyetherpolyole. Sie sind z.B. durch Polymerisation von Ethylenoxid, Propylenoxid und/oder Tetrahydrofuran mit sich selbst, z.B. in Gegenwart von BF₃ oder basischen Katalysatoren oder aber durch Anlagerung dieser Verbindungen gegebenenfalls auch im Gemisch oder nacheinander, an Starterkomponenten mit reaktionsfähigen Wasserstoffatomen, wie Alkohole, Amine, Aminoalkohole oder Wasser erhältlich.

Die genannten Polyolkomponenten (a) können auch als Mischungen, gegebenfalls auch zusammen mit anderen Polyolen (a) wie z.B. Polyesteramiden, Polyetherestern, Polyacrylaten, Polyolen auf Epoxidharzbasis, eingesetzt werden.

Die Hydroxylzahl der Polyole (a) liegt bei 5 bis 350, vorzugsweise bei 8 bis 200 mg KOH/g Substanz. Die Molekulargewichte der Polyole (a) liegen zwischen 500 und 25000, vorzugsweise zwischen 500 und 15000, wobei in einer bevorzugten Ausführungsform zumindest teilweise Polyole (a) mit einem Molekulargewicht von > 9000 g/Mol eingesetzt werden.

Bevorzugt werden als Komponente (a) hydrolysestabile Polyole des Molekulargewichtes 300 bis 3500, insbesondere 900 bis 2500, bestehend insbesondere zu mindestens 50% aus Polycarbonatdiolen, Polytetrahydrofurandiolen und/oder di- bzw. trifunktionellen Polyethern auf Propylenoxid- bzw. Propylenoxid-/Ethylenoxidbasis bzw. Mischungen der genannten hydrolysestabilen Polyole eingesetzt werden können. Diese hydrolysestabilen Polyole können zusammen mit Polyesterpolyolen, vorzugsweise Polyesterpolyolen mit vergleichsweiser guter Hydrolysestabilität, wie z.B. Polyester auf Basis Phthalsäureanhydrid, Isophthalsäure, Dimerfettsäure, Adipinsäure, Hexandiol, Butandiol und/oder Neopentylglykol eingesetzt werden.

In einer weiteren bevorzugten Ausführungsform werden als Komponente (a) hydrophile Polyole, wie z.B. Ethylenoxidpolyether, Ethylenoxid-/Propylenoxidpolyether oder Polyester auf Basis von Triethylenglykol oder Tetraethylenglykol und Dicarbonsäuren in solchen Mengen eingesetzt, daß damit hergestellte Beschichtung wasserdampfdurchlässig sind. Als Komponente (a) sind dann vorzugsweise 10 bis 60 Gew.-% hydrophile Polyole neben 23 bis 50 Gew.-% nichthydrophilen Polyolen, jeweils bezogen auf Gesamtfeststoffgehalt des Polyurethans, enthalten, wobei die Gesamtmenge Komponente (a) maximal 92 Gew.-% des Gesamtfeststoffgehaltes des Polyurethans beträgt.

Entsprechende Polyurethanlösungen sind zur Herstellung hochwertiger Beschichtungen mit hoher Wasserdampfdurchlässigkeit und dem damit verbundenen, ausgezeichneten Tragekomfort sehr gut geeignet. Die erfindungsgemäßen Beschichtungen vereinen dabei eine hohe Wasserdampfdurchlässigkeit mit einer sehr guten Wasserfestigkeit bzw. Naßechtheit und einer relativ niedrigen Wasserquellung.

Der Gesamtanteil an hydrophilen Bestandteilen - Polyole (a) und gegebenenfalls hydrophile Diole bzw. Diamine (c)- beträgt dabei bezogen auf den Gesamtfeststoff gehalt der Polyure-thanlösung 10 bis 60, vorzugsweise 20 bis 45 Gew.-%.

Die Komponente (b) besteht aus mindestens einem organischen, mindestens difunktionellen Polyisocyanat des Molekulargewichtes 140 bis 1500, vorzugsweise 168 bis300. Geeignet sind z.B. Hexamethylendiisocyanat (HDI), Isophorondiisocyanat (IPDI), 4,4'-Diisocyanato-dicyclohexylmethan (H12MDI), 1,4-Butandiisocyanat, H₆-2,4- und/oder 2,6-Diisocyanato-toluol, Hexahydrodiisocyanatoxylol, 2,4- oder 2,6-Diisocyanatotoluol (TDI), Xylylendiisocyanat und 4,4'-Diisocyanatodiphenylmethan (MDI). Ebenfalls mit verwendet werden können an sich bekannte Polyisocyanate auf Basis der genannten und auch anderer Isocyanate mit Uretdion-, Biuret-, Isocyanurat-, Iminoxadiazindion- oder Urethanstruktureinheiten.

Bevorzugt ist die ausschließliche Verwendung von aliphatischen und/oder cycloaliphatischen difunktionellen Isocyanaten des Molekulargewichtes 168 bis 262 wie Isophorondiisocyanat und/oder Hexamethylendiisocyanat und/oder Diisocyanatodicyclohexylmethan (Desmodur® W, Bayer AG) und/oder H₆-2,4- und/oder 2,6-Diisocyanatotoluol, wobei besonders bevorzugt die Komponente (b) zu mindestens 75 Gew.-% aus Isophorondiisocyanat oder H₆-2,4- und/oder 2,6-Diisocyanatotoluol besteht.

Bevorzugt ist ebenfalls die ausschließliche Verwendung von aromatischen Diisocyanaten des Molekulargewichtes 174 bis 280, insbesondere von 2,4- und/oder 2,6-Diisocyanatotoluol und/oder 4,4'-Diisocyanatodiphenylmethan.

In einer bevorzugten Ausführungsform werden allophanatgruppenhaltige, difunktionelle Iso-cyanate als Komponente (b) eingesetzt. Solche Komponenten werden erhalten, indem ein Diisocyanat, vorzugsweise aromatische Diisocyanate wie z.B. MDI oder TDI mit aliphatischen, linearen Monoalkoholen mit 4 bis 18 Kohlenstoffatomen wie z.B. n-Butanol, 1-Hexanol, 2-Ethylhexanol oder Stearylalkohol gegebenfalls unter Verwendung geeigneter Katalysatoren wie z.B Zinkacetylacetonat bei Temperaturen von z.B. 40 bis 110 °C unter Allophanatbildung umgesetzt werden. Dabei führt die Umsetzung von 2 Molekülen Diisocyanat mit einem Molekül Monoalkohol zur Bildung eines Diisocyanates mit einer Allophanatstruktureinheit, wobei auch höhere Homologe gebildet werden können. Es ist auch möglich die Allophanatbildung in situ bei dem Aufbau des erfindungsgemäßen Polyurethans durchzuführen. Die Mitverwendung allophanatgruppenhaltiger Diisocyanate führt überraschenderweise zu Polyurethanen, die die Herstellung von Beschichtungen mit besonders guten Beständigkeitseigenschaften z.B. gegen Lösemitteleinwirkung oder Wasser und einem angenehmen Griff ermöglichen.

Bei der Komponente (c) handelt es sich um niedermolekulare Verbindungen des Molekulargewichtsbereiches 32 bis 500 mit mindestens zwei gegenüber Isocyanatgruppen reaktiven Gruppen. Diese reaktiven Gruppen sind vorzugsweise Hydroxyl-und/oder primäre bzw. sekundäre Aminogruppen.

Geeignete Komponenten (c) sind z.B. Ethylenglykol, 1,2- bzw. 1,3-Propylenglykol, 1,4-Butan-diol, Neopentylglykol, 1,6-Hexandiol, Trimethylpentandiol, Trimethylolpropan, Glycerin, das Umsetzungsprodukt aus 2 Mol Propylencarbonat und 1 Mol Hydrazin, Ethylendiamin, Diethylentriamin, Isophorondiamin, Hexamethylendiamin, Acetonazin, 4,4-Diaminodicyclo-hexylmethan, Hydroxyethylethylendiamin, Ethanolamin, Diethanolamin, Isopropanolamin, Diisopropanolamin, N-Methylethanolamin, Aminomethylpropanol, Hydrazin(hydrat), Propylendiamin, Dimethylethylendiamin, Adipinsäuredihydrazid , 2-Aminoethylaminoethan-sulphonat, das 1:1-Umsetzungsprodukt aus Acrylsäure und Isophorondiamin oder. Ethylendiamin, Dimethylolessigsäure, 2,2'-Dimethylolpropionsäure, 2,2'-Dimethylolbuttersäure, 2,2'-Dimethylolpentansäure, gegebenenfalls Ethergruppen aufweisenden Sulfonatdiolen der in US-A-4 108 814 beschrieben Art, aminofunktionelle Sulphonate mit ein oder zwei Aminogruppen, N-2-(aminoethyl)-3-aminopropyltrimethoxysilan.

Wird eine Komponente (c) im ersten, einstufig oder zweistufig durchgeführten Reaktionsschritt mitverwendet, so werden vorzugsweise dihydroxyfunktionelle Verbindungen, insbesondere Ethylenglykol, 1,4-Butandiol, 1,6-Hexandiol oder Ethergruppen aufweisende Sulphonatdiole eingesetzt.

Wird eine Komponente (c), vorzugsweise nach Zugabe von Lösemittel in einem zweiten oder weiteren Reaktionsschritt eingesetzt, so werden vorzugsweise diaminofunktionelle Verbindungen, insbesondere Ethylendiamin, Isophorondiamin, 4,4-Diaminodicyclohexymethan, Hydrazin(hydrat), Adipinsäuredihydrazid, 2-Aminoethylaminoethansulphonat eingesetzt.

In einer bevorzugten Ausführungsform werden als Komponente (c) hydrophile, Salzgruppen aufweisende difunktionelle Verbindungen der oben genannten Art in Mengen von 2 bis 16 Gew.-%, besonders bevorzugt von 2,5 bis 13 Gew.-% gegebenenfalls in Kombination mit hydrophilen Polyolen (a) eingesetzt, um entsprechenden Beschichtungen wasserdampfdurchlässigen Charakter zu verleihen.

Besonders bevorzugt werden dabei hydrophile Komponenten (c) zusammen mit den oben genannten hydrophilen Polyolen (a) eingesetzt. Dadurch können Beschichtungen mit besonders hoher Wasserdampfdurchlässigkeit hergestellt werden.

In einer bevorzugten Ausführungsform werden als Komponente (c) Hydrazin-(hydrat), Adipinsäuredihydrazid und/oder das Umsetzungsprodukt aus 2 Mol Propylencarbonat und 1 Mol Hydrazin in Mengen von 0,1 bis 4,5 Gew.-% mitverwendet.

Monoaminofunktionelle heterocyclische Komponenten (d) werden vorzugsweise in Mengen von 0,1 bis 3, besonders bevorzugt in Mengen von 0,3 bis 1,1 Gew.-% eingesetzt. Geeignete Komponenten d) sind z.B. 1,2,4-Triazol, 3,5-Dimethylpyrazol, Benzotriazol, Benzimidazol, Imidazol, 2-Methylimidazol, 1,2,3-Triazol, Pyrazol, Pyrrol, Tetrazol. Besonders geeignete, bevorzugte Komponenten (d) sind z.B. 1,2,4-Triazol, 3,5-Dimethylpyrazol, Benzotriazol und/oder Benzimidazol.

Die Komponente (d) wird in solcher Menge eingesetzt, daß je Äquivalent Isocyanatgruppen mindestens 1 Äquivalent, vorzugsweise 1,15 Äquivalente, besonders bevorzugt 1,3 an Komponente (d) verwendet wird. Vorzugsweise sind daher in den erfindungsgemäßen Polyurethanlösungen monoaminofunktionelle heterocyclische Verbindungen (d) in freier Form enthalten.

Überraschenderweise wurde gefunden, das solche erfindungsgemäßen Polurethanlösungen eine verbesserte Thermostabilität aufweisen, insbesondere bei Belastung mit Temperaturen über 120 °C, die z.B. nach Applikation als Lack oder Beschichtung während der Trocknung bzw. Aushärtung auftreten können.

Die Herstellung der erfindungsgemäßen Polyurethanlösungen erfolgt derart, daß zunächst aus mindestens einem Polyol (a), mindestens einem difunktionellen Polyisocyanat (b) gegebenenfalls unter Mitverwendung einer niedermolekularen hydroxyfunktionellen Komponente (c) in einer ein- oder zweistufigen Reaktion ein isocyanatfunktionelles Polyurethan hergestellt wird, welches dann gegebenenfalls in einem weiteren Reaktionsschritt durch Umsetzung mit einer mindestens difunktionellen Komponente (c) einen weiteren Molekulargewichtsaufbau erfährt und in einem abschließenden Reaktionsschritt mit einer monoaminofunktionellen heterocyclischen Komponente (d) zu einem keine freien Isocyanatgruppen mehr aufweisenden hochmolekularen Polyurethan umgesetzt wird, wobei entweder vor, während oder nach dem ersten Reaktionsschritt soviel organisches Lösemittel zugesetzt wird, das die resultierende Polyurethanlösung einen Festkörpergehalt von 9 bis 65 Gew.-% aufweist.

Die Umsetzung der Komponenten erfolgt in der Regel bei Raumtemperatur bis 120 °C, wobei üblicherweise zu Beginn der Herstellung die Umsetzung bei höherer Temperatur, z.B. bei 60 bis 120 ° C und am Ende bei der Kettenverlängerung bis Kettenabbruchreaktion die Umsetzung bei niedrigeren Temperaturen, z. B. bei Raumtemperatur bis 60 °C vorgenommen wird.

Die Umsetzung der Komponenten kann unter Zusatz von Katalysatoren wie z.B. Dibutylzinndilaurat, Zinn-2-octoat, Dibutylzinnoxid oder Diazabicyclononan durchgeführt werden.

Geeignete Lösemittel zur Herstellung der erfindungsgemäßen Polyurethanlösungen sind z.B. Dimethylformamid, Dimethylacetamid, N-Methylpyrrolidon, Methylethylketon, Methylisobutylketon, Cyclohexanon, Toluol, Xylol, tert. Butanol, Isopropanol, Ethylacetat, Butylacetat, Methoxypropanol, Butylglykol, Methoxypropylacetat, Isobutanol. Die Auswahl von Art, Menge und Zeitpunkt der Zugabe des Lösemittels bzw. der Lösemittelgemische muß derart gewählt werden, daß die Löslichkeit des Endproduktes bzw. der Zwischenstufen gegeben ist, die Viskositäten in einem technisch beherrschbaren Rahmen, d.h. üblicherweise < 200 000 mPas (23 °C), liegen und eine Reaktion der Lösemittel mit den Rohstoffen des Polyurethans weitestgehend ausgeschlossen ist. Das heißt z.B., daß alkoholische Lösemittel erst dann verwendet werden sollten, wenn bei der Herstellung des Polyurethans nur noch Isocyanat-Amin-Reaktionen bzw. vergleichbar schnell ablaufende Reaktionen stattfinden.

Die Festkörpergehalt der erfindungsgemäßen Polyurethanlösungen liegen bei 9 bis 65, vorzugsweise bei 20 bis 50 Gew.-%.

Die Viskositäten der erfindungsgemäßen Polyurethanlösungen liegen bei 1 000 bis 200 000 mPas (23°C), vorzugsweise bei 3 000 bis 80 000 mPas (23 °C).

Die Molekulargewichte der erfindungsgemäßen Polyurethanlösungen können z.B. durch Gelpermeationschromatographie bestimmt werden. Sie liegen zwischen 4 000 und 500 000, vorzugsweise zwischen 25 000 und 250 000 g/Mol.

Vor, während oder nach der Herstellung bzw. vor oder während der Anwendung der erfindungsgemäßen Polyurethanlösungen können übliche Hilfs- und Zusatzmittel zugegeben werden wie z.B. Stabilisatoren, Lichtschutzmittel, Verlaufshilfsmittel, Mattierungsmittel, Thermostabilisatoren, Trennmittel, Antioxidantien, UV-Absorber, HALS-Wirkstoffe, Entschäumer, Haftvermittler, Antistatika, Konservierungsmittel, Katalysatoren.

Die erfindungsgemäßen Polyurethanlösungen eignen sich für die Verwendung in Lacken, Beschichtungen, Dichtmassen, Druckfarben und Klebstoffen. Sie können dabei alleine und/oder nach Zusatz der üblichen Hilfsmittel, Zusatzmittel, Pigmente, Füllstoffe, Weichmacher, Löse- und Verdünnungsmittel und/oder in Kombination mit anderen Polymeren bzw. Polymerlösungen oder Oligomeren wie z.B. Polyurethanlösungen, Polyharnstofflösungen, Polyurethan-Polyharnstofflösungen, Co- und Homopolymerisatlösungen, Chlorkautschuklösungen, Nitrocelluloselösungen, Celluloseacetat/butyratlösungen, Polyacrylatlösungen, Polyether-(lösungen), Polyamidlösungen, Polyepoxid(lösungen), Polyester(lösungen), Polyisocyanat(lösungen), Melamin-Aldehyd-Harz(lösungen), Harnstoffharz(lösungen), Polybutadienlösungen oder Polyolefinlösungen verwendet werden.

Geeignete Anwendungsbereiche sind z.B. die Textilbeschichtung, die Lederbeschichtung, die Kunstlederbeschichtung, Kunststoffbeschichtung und -lackierung, Metallackierung, Lackieren und Beschichten von Holz, Holzwerkstoffen und Möbeln, Beschichtung und Lackierung mineralischer Untergründe aller Art, Straßenmarkierungsfarben. Die erfindungsgemäßen Polyurethanlösungen können dabei z.B. als Grundierung, Zwischenschicht, Füller, Basislack, Decklack, Klarlack, Einschichtlack, mikroporöse Beschichtung, Haftgrund, Deckstrich, Finish, Direktstrich, Zwischenstrich, Schaumstrich eingesetzt werden.

Die Applikation kann nach allen technisch angewandten Verfahren erfolgen, wie z.B. Gießen, Tauchen, Walzen, Rollen, Streichen, Spritzen, Rakeln oder Koagulation.

## Patentansprüche

1. Lösungen von Polyurethanen in organischen Lösungsmitteln, erhältlich durch Umsetzung von
a) mindestens eines, mindestens difunktionellen Polyols des Molekulargewichtes 500 bis 16000,
b) mindestens eines, mindestens difunktionellen Polyisocyanates des Molekulargewichtes 140 bis 1500,
c) gegebenenfalls mindestens eines niedermolekularen, mindestens difunktionellen Alkohols und/oder Amins des Molekulargewichtes 32 bis 500 und
d) mindestens einer monoaminofunktionellen heterocyclischen Verbindung,
wobei aus mindestens einem Polyol (a), mindestens einem Polyisocyanat (b), gegebenenfalls unter Mitverwendung der Komponente (c), in einer ein- oder zweistufigen Reaktion ein isocyanatfunktionelles Polyurethan hergestellt wird, welches gegebenenfalls in einem weiteren Reaktionsschritt durch Umsetzung mit einer mindestens difunktionellen Komponente (c) einen weiteren Molekulargewichtsaufbau erfährt und in einem abschließenden Reaktionsschritt mit einer monoaminofunktionellen heterocyclischen Verbindung (d) zu einem keine freien Isocyanatgruppen mehr aufweisenden, hochmolekularen Polyurethan bzw. Polyurethan-Polyharnstoff umgesetzt wird, wobei entweder vor, während oder nach dem ersten Reaktionsschritt soviel organisches Lösemittel zugesetzt wird, das die resultierende Polyurethan- bzw. Polyurethan-Polyharnstofflösung einen Festkörpergehalt von 9 bis 65 Gew.% aufweist.

2. Lösungen gemäß Anspruch 1, **dadurch gekennzeichnet, dass** die Polyurethane Umsetzungsprodukte sind von
a) 40 bis 92 Gew.-% mindestens eines, mindestens difunktionellen Polyols des Molekulargewichtes 500 bis 16000,
b) 7 bis 50 Gew.-% mindestens eines, mindestens difunktionellen Polyisocyanates des Molekulargewichtes 140 bis 1500,
c) 0 bis 20 Gew.-% mindestens eines niedermolekularen, mindestens difunktionellen Alkohols und/oder Amins des Molekulargewichtes 32 bis 500,
d) 0,1 bis 3 Gew.-% mindestens einer monoaminofunktionellen heterocyclischen Verbindung.

3. Lösungen gemäß Anspruch 1, **dadurch gekennzeichnet, dass** die Polyurethane Umsetzungsprodukte sind von
a) 47 bis 88 Gew.-% mindestens eines, mindestens difunktionellen Polyols des Molekularge- wichtes 500 bis 16000,
b) 10 bis 40 Gew.-% mindestens eines difunktionellen Polyisocyanates des Molekulargewichtes 168 bis 300,
c) 0,5 bis 17 Gew.-% mindestens eines niedermolekularen, mindestens difunktionellen Alkohols und/oder Amins des Molekulargewichtes 32 bis 500,
d) 0,3 bis 1,1 Gew.-% einer monoaminofunktionellen heterocyclischen Verbindung.

4. Lösungen gemäß Anspruch 1, **dadurch gekennzeichnet, dass** als Komponente (a) 10 bis 60 Gew.-% hydrophile Polyole neben 23 bis 50 Gew.-% nichthydrophilen Polyolen, jeweils bezogen auf Gesamtfeststoffgehalt des Polyurethans, eingesetzt werden, wobei die Gesamtmenge Komponente (a) maximal 92 Gew.-% des Gesamtfeststoffgehaltes des Polyurethans beträgt.

5. Lösungen gemäß Anspruch 1, **dadurch gekennzeichnet, dass** als Komponente (b) ausschließlich aliphatische bzw. cycloaliphatische Diisocyanate, bestehend zu mindestens 75 Gew.-% aus Isophorondiisocyanat oder ausschließlich 2,4- bzw. 2,6-Diisocyanatotoluol und/oder 4,4'-Diisocyanatodiphenylmethan eingesetzt werden.

6. Lösungen gemäß Anspruch 1, **dadurch gekennzeichnet, dass** als Komponente (b) Allophanatgruppen enthaltende Diisocyanate eingesetzt werden.

7. Lösungen gemäß Anspruch 1, **dadurch gekennzeichnet, dass** als Komponente (c) hydrophile, Salzgruppen aufweisende difunktionelle Verbindungen in Mengen von 2 bis 16 Gew.-% eingesetzt werden.

8. Lösungen gemäß Anspruch 1, **dadurch gekennzeichnet, dass** eine hydrophile Komponente (c) zusammen mit einem hydrophilen Polyol (a) eingesetzt wird.

9. Lösungen gemäß Anspruch 1, **dadurch gekennzeichnet, dass** als monoaminofunktionelle, heterocyclische Komponente (d) 1,2,4-Triazol eingesetzt wird.

10. Lösungen gemäß Anspruch 1, **dadurch gekennzeichnet, dass** als monoaminofunktionelle, heterocyclische Komponente (d) 3,5-Dimethylpyrazol eingesetzt wird.

11. Lösungen gemäß Anspruch 1, **dadurch gekennzeichnet, dass** als monoaminofunktionelle, heterocyclische Komponente (d) Benzotriazol oder Benzimidazol eingesetzt wird.

12. Lösungen gemäß Anspruch 1, **dadurch gekennzeichnet, dass** als Komponente (c) Hydrazin(hydrat), Adipinsäuredihydrazid und/oder das Umsetzungsprodukt aus 2 Mol Propylencarbonat und 1 Mol Hydrazin in Mengen von 0,1 bis 1,5 Gew.-% eingesetzt wird.

13. Verwendung von Polyurethanlösungen gemäß Ansprüchen 1 bis 12 in Lacken, Beschichtungen, Dichtstoffen und/oder Klebstoffen.

14. Verwendung von Polyurethanlösungen gemäß Ansprüchen 1 bis 12 für die Lackierung und/oder Beschichtung von Kunststoffen, für die Beschichtung von Textilien und/oder Leder.

15. Verwendung von Polyurethanlösungen gemäß Ansprüchen 1 bis 12 in wasserdampfdurchlässigen Textil- und/oder Lederbeschichtungen.

16. Mit aus Polyurethanlösungen gemäß Ansprüchen 1 bis 12 erhaltenen Schichten beschichtete Substrate.

## Claims

1. Solutions of polyurethanes in organic solvents obtainable by reacting
a) at least one at least difunctional polyol with a molecular weight of 500 to 16000,
b) at least one at least difunctional polyisocyanate with a molecular weight of 140 to 1500,
c) optionally at least one low molecular weight at least difunctional alcohol and/or amine with a molecular weight of 32 to 500 and
d) at least one monoamino-functional heterocyclic compound,
wherein, an isocyanate-functional polyurethane is prepared, in a single or two-stage reaction, from at least one polyol (a), at least one polyisocyanate (b), optionally with the joint use of component (c), which then experiences a further increase in molecular weight, optionally in a further reaction step, by reacting with an at least difunctional component (c) and in a subsequent reaction step reacts with a monoamino-functional heterocyclic compound (d) to give a high molecular weight polyurethane or polyurethane/polyurea which no longer contains any free isocyanate groups, wherein either before, during or after the first reaction step enough organic solvent is added for the resulting polyurethane or polyurethane/polyurea solution to have a solids content of 9 to 65 wt.%.

2. Solutions according to Claim 1, **characterised in that** the polyurethanes are reaction products of
a) 40 to 92 wt.% of at least one at least difunctional polyol with a molecular weight of 500 to 16000,
b) 7 to 50 wt.% of at least one at least difunctional polyisocyanate with a molecular weight of 140 to 1500,
c) 0 to 20 wt.% of at least one low molecular weight at least difunctional alcohol and/or amine with a molecular weight of 32 to 500,
d) 0.1 to 3 wt.% of at least one monoamino-functional heterocyclic compound.

3. Solutions according to Claim 1, **characterised in that** the polyurethanes are reaction products of
a) 47 to 88 wt.% of at least one at least difunctional polyol with a molecular weight of 500 to 16000,
b) 10 to 40 wt.% of at least one at least difunctional polyisocyanate with a molecular weight of 168 to 300,
c) 0.5 to 17 wt.% of at least one low molecular weight at least difunctional alcohol and/or amine with a molecular weight of 32 to 500,
d) 0.3 to 1.1 wt.% of a monoamino-functional heterocyclic compound.

4. Solutions according to Claim 1, **characterised in that** 10 to 60 wt.% of hydrophilic polyols, in addition to 23 to 50 wt.% of non-hydrophilic polyols, each with respect to the total solids content of the polyurethane are used as component (a), wherein the total amount of component (a) is at most 92 wt.% of the total solids content of the polyurethane.

5. Solutions according to Claim 1, **characterised in that** exclusively aliphatic or cycloaliphatic diisocyanates, at least 75 wt.% of which consist of isophorone diisocyanate, or exclusively 2,4- or 2,6-diisocyanatotoluene and/or 2,4-diisocyanatodiphenylmethane are used as component (b).

6. Solutions according to Claim 1, **characterised in that** allophanate group-containing diisocyanates are used as component (b).

7. Solutions according to Claim 1, **characterised in that** hydrophilic, salt group-containing, difunctional compounds are used as component (c), in amounts of 2 to 16 wt.%.

8. Solutions according to Claim 1, **characterised in that** a hydrophilic component (c) is used together with a hydrophilic polyol (a).

9. Solutions according to Claim 1, **characterised in that** 1,2,4-triazole is used as monoamino-functional heterocyclic component (d).

10. Solutions according to Claim 1, **characterised in that** 3,5-dimethylpyrazole is used as monoamino-functional heterocyclic component (d).

11. Solutions according to Claim 1, **characterised in that** benzotriazole or benzimidazole is used as monoamino-functional heterocyclic component (d).

12. Solutions according to Claim 1, **characterised in that** hydrazine (hydrate), adipic acid dihydrazide and/or the reaction product of 2 moles of propylene carbonate and 1 mole of hydrazine are used as component (c), in amounts of 0.1 to 1.5 wt.%.

13. Use of polyurethane solutions according to Claims 1 to 12 in lacquers, coatings, sealants and/or adhesives.

14. Use of polyurethane solutions according to Claims 1 to 12 for lacquering and/or coating plastics, for coating textiles and/or leather.

15. Use of polyurethane solutions according to Claims 1 to 12 in water vapour permeable textile and/or leather coatings.

16. Substrates coated with layers obtained from polyurethane solutions in accordance with Claims 1 to 12.

## Revendications

1. Solutions de polyuréthanne dans des solvants organiques, qui peuvent être obtenues par la conversion de
a) au moins un polyol, au moins bifonctionnel, de poids moléculaire 500 à 16000,
b) au moins un polyisocyanate, au moins bifonctionnel, de poids moléculaire 140 à 1500,
c) le cas échéant au moins un alcool et/ou une amine à faible poids moléculaire, au moins bifonctionnel, de poids moléculaire 32 à 500 et
d) au moins un composé hétérocyclique monoaminofonctionnel,
un polyuréthanne à fonction isocyanate étant fabriqué au cours d'une réaction à une ou deux étapes à partir d'au moins un polyol (a), d'au moins un polyisocyanate (b), le cas échéant avec utilisation conjointe du composant (c), lequel polyuréthanne subissant le cas échéant une augmentation supplémentaire du poids moléculaire au cours d'une étape de réaction supplémentaire par conversion avec un composant au moins bifonctionnel (c) et réagissant au cours d'une étape de réaction finale avec un composé hétérocyclique monoaminofonctionnel (d) pour former un polyuréthanne ou un polyuréthanne polyurée à poids moléculaire élevé ne présentant plus de groupes isocyanates libres, une quantité de solvant organique telle que la solution de polyuréthanne ou de polyuréthanne polyurée résultante présente une teneur en matières solides de 9 à 65 % en poids étant ajoutée avant, pendant ou après la première étape de réaction.

2. Solutions suivant la revendication 1, **caractérisées en ce que** les polyuréthannes sont des produits de conversion de
a) 40 à 92 % en poids d'au moins un polyol, au moins bifonctionnel, de poids moléculaire 500 à 16000,
b) 7 à 50 % en poids d'au moins un polyisocyanate, au moins bifonctionnel, de poids moléculaire 140 à 1500,
c) 0 à 20 % en poids d'au moins un alcool et/ou une amine à faible poids moléculaire, au moins bifonctionnel, de poids moléculaire 32 à 500,
d) 0, 1 à 3 % en poids d'au moins un composé hétérocyclique monoaminofonctionnel.

3. Solutions suivant la revendication 1, **caractérisées en ce que** les polyuréthannes sont des produits de conversion de
a) 47 à 88 % en poids d'au moins un polyol, au moins bifonctionnel, de poids moléculaire 500 à 16000,
b) 10 à 40 % en poids d'au moins un polyisocyanate, au moins bifonctionnel, de poids moléculaire 168 à 300,
c) 0,5 à 17 % en poids d'au moins un alcool et/ou une amine à faible poids moléculaire, au moins bifonctionnel, de poids moléculaire 32 à 500,
d) 0,3 à 1,1 % en poids d'un composé hétérocyclique monoaminofonctionnel.

4. Solutions suivant la revendication 1, **caractérisées en ce qu'**on utilise comme composant (a) 10 à 60 % en poids de polyols hydrophiles en plus de 23 à 50 % en poids de polyols non hydrophiles, respectivement rapportés à la teneur totale en matières solides du polyuréthanne, la quantité totale du composant (a) étant au maximum de 92 % en poids de la teneur totale en matières solides du polyuréthanne.

5. Solutions suivant la revendication 1, **caractérisées en ce qu'**on utilise comme composant (b) exclusivement des diisocyanates aliphatiques ou cycloaliphatiques, constitués à au moins 75 % en poids de diisocyanate d'isophorone ou exclusivement de 2,4-diisocyanate de toluène ou 2,6-diisocyanate de toluène et/ou de 4,4'-diisocyanate de diphénylméthane.

6. Solutions suivant la revendication 1, **caractérisées en ce qu'**on utilise comme composant (b) des diisocyanates contenant des groupes allophanates.

7. Solutions suivant la revendication 1, **caractérisées en ce qu'**on utilise comme composant (c) des composés bifonctionnels hydrophiles présentant des groupes de sels, en quantités de 2 à 16 % en poids.

8. Solutions suivant la revendication 1, **caractérisées en ce qu'**on utilise un composant (c) hydrophile avec un polyol hydrophile (a).

9. Solutions suivant la revendication 1, **caractérisées en ce qu'**on utilise comme composant hétérocyclique monoaminofonctionnel (d) du 1,2,4-triazole.

10. Solutions suivant la revendication 1, **caractérisées en ce qu'**on utilise comme composant hétérocyclique monoaminofonctionnel (d) du 3,5-diméthylpyrazole.

11. Solutions suivant la revendication 1, **caractérisées en ce qu'**on utilise comme composant hétérocyclique monoaminofonctionnel (d) du benzotriazole ou du benzimidazole.

12. Solutions suivant la revendication 1, **caractérisées en ce qu'**on utilise comme composant (c) l'(hydrate d')hydrazine, le dihydrazide d'acide adipique et/ou le produit de conversion de 2 moles de carbonate de propylène et de 1 mole d'hydrazine en quantités de 0,1 à 1,5 % en poids.

13. Utilisation de solutions de polyuréthanne suivant les revendications 1 à 12 dans des laques, enductions, produits d'étanchéité et/ou adhésifs.

14. Utilisation de solutions de polyuréthanne suivant les revendications 1 à 12 pour le laquage et/ou l'enduction de matières plastiques, pour l'enduction de textiles et/ou de cuir.

15. Utilisation de solutions de polyuréthanne suivant les revendications 1 à 12 dans des enductions de textiles et/ou de cuir perméables à la vapeur d'eau.

16. Substrats enduits des couches obtenues à l'aide des solutions de polyuréthanne suivant les revendications 1 à 12.
